# EUROPEAN PATENT APPLICATION

(11) **EP 2 750 065 A1**
(43) Date of publication of application: **02.07.2014**
(21) Application number: 12382538.2
(22) Date of filing: 27.12.2012
(51) Int. Cl.: G06F 21/51

(54) **Method, system and computer program product for managing operations of service terminals**

(71) Applicant: Telefonica S.A., 28013 Madrid (ES)
(72) Inventor: Villoslada de la Torre, Eduardo, 28013 Madrid (ES); Flores Cuadrado, Ana, 28013 Madrid (ES); Martínez Elicegui, Javier, 28013 Madrid (ES); Ortega Barrado, Pedro Jose, 28013 Madrid (ES)
(74) Representative: Gonzalez-Alberto Rodriguez, Natalia

(57) **Abstract**

The method comprising sending a request from at least one service terminal to a remote server to download at least one computer algorithm, said at least one service terminal including a state machine for loading computer algorithms, wherein said at least one downloaded computer algorithm is used for performing operations by said at least one service terminal, the method further using a sign server and an OTA server for performing the following steps: a) carrying out an authentication process of said at least one downloaded computer algorithm providing a first secure key; b) validating a plurality of parameters of said at least one service terminal, generating a second secure key; c) further generating a new secure key by combining said first and said second generated secure keys, and d) sending said new secure key to said at least one service terminal trough an OTA server, wherein a security module of said at least one service terminal e) further validates said received new secure key by comparing it with a self-generated secure key.

## Description

### Field of the art

The present invention generally relates to the field of telecommunications and, more in particular it refers to a method, a system and a computer program product for managing operations of service terminals connected to remote servers.

### Prior State of the Art

This application is an extension of patent application US 2011/0219096.

Patent application US 2011/0219096 discloses a method and a system to manage applications in a Point of Sales (POS) or service terminal based on a state machine. The state machine includes a sequence of states with the goal of downloading one or several application algorithms, formally defined in a server, connected from said POS; these algorithms are interpreted by the state engine, and that way executed.

Namely, a POS or service terminal is a system which manages the sale process by means of an accessible interface for sellers, but generally speaking the concept POS is applied to any application from which a sales process is provided.

Moreover, this application is also related to Over-the-air mechanisms (OTA). OTA mechanisms refers to various methods of distributing data to connected devices, based on communications between mobile operator and the Subscriber Identity Module (SIM) located on the devices.

There are standardizing works in Open Mobile Alliance (OMA) and 3GPP about the interfaces to implement in the different modules and the live cycle.

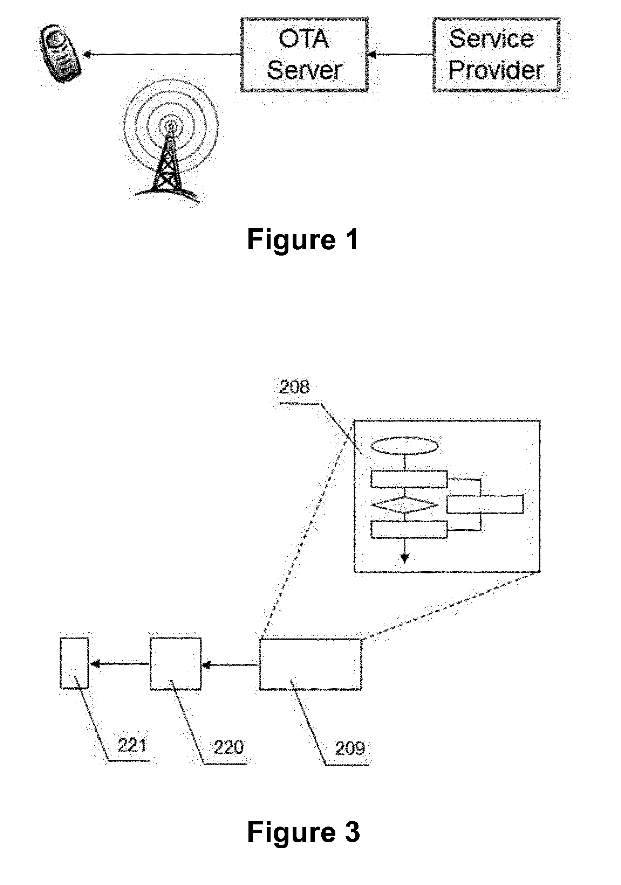

Figure 1 represents the more basic architecture of an OTA system, where the mobile operator, using an OTA Server sends the information to the device. Other architectures, more complex, can be found in the state of the art, when there are multiple services from multiple providers, using multiple mobile operators. In this case, usually appears a new architectural component called Trusted Services Manager (TSM), with the mission of agree each actor.

The model of patent application US 2011/0219096 is based on applications to be executed on the POS being defined as an algorithm or computer algorithm in a server; under these conditions, security problems in the server, or between the POS and the server, can be used to move it to the POS; this issue is worse where the applications in POS are usually financial (sales). So, the risk in these scenarios is crucial.

More obvious solutions could be increase security in communications with authentication in the server or with mutual authentication between POS and server, or ciphering the communications; in these cases messages interception or manipulation are avoided, but not the case where somebody gains access to the server. In this case, it is possible to modify the messages downloaded by POS, which consider them right, with the possibility to execute fraudulent transactions.

The risk appears when the connection between server and POS, or even when only the server, are manipulated during the POS application download process. For instance, if a hacker takes control over the server from applications that are downloaded, he/she could modify the applications to collect credit card data.

So, considering this scenario and the relevance of sent messages, it is necessary to modify the proposed method of patent application US 2011/0219096 to guarantee that applications executed in POS are the applications selected in the server.

### Summary of the Invention

The invention proposes a solution extending patent application US 2011/0219096 considering security aspects in order to avoid those risk situations. In order to do that, an improved method is provided, adding new steps and security elements to the previous one; thus ensuring the security of downloaded applications.

The main idea is to sign the applications downloaded, both in the server and in the POS or service terminal, to identify which are valid and to discard the invalid ones.

In accordance with one aspect of the present invention, there is provided a method for managing operations of service terminals, comprising sending a request from at least one service terminal to a remote server to download at least one computer algorithm, said at least one service terminal including a state machine for loading computer algorithms, wherein said at least one downloaded computer algorithm is used for performing operations by said at least one service terminal. The method, on contrary to the known proposals, comprises the use of a sign server and an OTA server for performing the following steps: a) carrying out an authentication process of said at least one downloaded computer algorithm providing a first secure key; b) validating a plurality of parameters of said at least one service terminal, generating a second secure key; c) further generating a new secure key by combining said first and said second generated secure keys; and d) sending said new secure key to said at least one service terminal trough an OTA server, wherein a security module of said at least one service terminal e) further validates said received new secure key by comparing it with a self-generated secure key.

According to an embodiment, the authentication process comprises at least validating and signing by said sign server said at least one downloaded computer algorithm based on validation rules to generate said first secure key.

Moreover, the validating of a plurality of parameters of said at least one service terminal is based on said validation rules to generate said second secure key.

In addition, the computer algorithms to be signed and the new secure keys generated are sent through different communication channels thus guaranteeing the security in the delivery.

The validation rules analyze and define if said at least one downloaded computer algorithm and said plurality of parameters of the at least one service terminal are valid, are rejected and/or require a manual validation.

According to another embodiment, the new secure key generated has an associated SIM identification regarding said at least on service terminal.

According to yet another embodiment, the signing is based on symmetric cryptography such as (3DES; RC5, AES...) or on asymmetric cryptography (RSA, DSA...).

In accordance with another aspect of the present invention, there is provided a system for managing operations of service terminals, wherein at least one service terminal comprising a plurality of modules, a state machine for loading computer algorithms and a communications interface is configured to download at least one algorithm of at least one application from a remote server to contribute in the performance of said operations to be executed in said at least one service terminal, wherein said remote server further comprises a communications interface for communicating with said at least one service terminal. On contrary to the know proposals, the system further comprises: a sign server configured to carry out an authentication process of said at least one downloaded computer algorithm and a validation process of a plurality of parameters of said at least one service terminal generating secure keys; a security module configured to generate and validate said security keys; and an OTA server to distribute said generated security keys.

According to an embodiment, said at least one service terminal further includes a SIM module comprising a security element configured to allow a secure communication from a mobile operator through said OTA server to said secure element.

The provided system of the second aspect is configured to implement the provided method of the first aspect.

Finally, in accordance with another aspect of the present invention, there is provided a computer program product, comprising software code adapted to perform steps a) to e) of claim 1 when run at least on a computer or any other form of programmable hardware.

### Brief Description of the Drawings

The previous and other advantages and features will be more fully understood from the following detailed description of embodiments, with reference to the attached, which must be considered in an illustrative and non-limiting manner, in which:
Figure 1 is an illustration of the basic architecture of an OTA system.
Figure 2 is an illustration scheme of the architecture of the present invention according to an embodiment.
Figure 3 is a representation of the modules used for calculating the security key according to an embodiment of the present invention.
Figure 4 illustrates the generation process of the secure key algorithm (first secure key) and the secure application key for a particular POS or service terminal (new secure key) according to an embodiment of the present invention.
Figure 5 illustrates the main steps of the provided method according to one aspect of the present invention for managing an operation in a POS or service terminal.

### Detailed Description of Several Embodiments

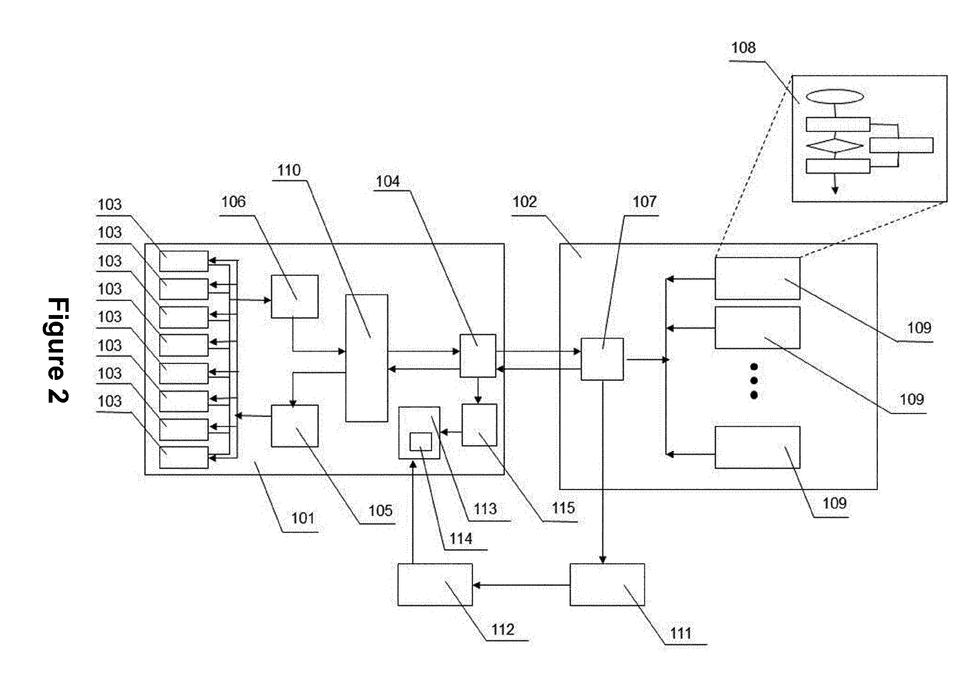

Figure 2 illustrates a scheme of the architecture according to one aspect of the present invention. More specifically, in figure 2 a point of sale (POS) terminal or service terminal 101 and a remote server 102 are represented.

A service/POS terminal 101 consists of a set of modules 103, each of them having a control element and an element for managing the events. Non-limitative examples of modules 103 which can be included in a service/POS terminal 101 are: contactless card reader, light emitting diodes, magnetic card readers, smart card slot, keyboard, printer, user interfaces, beeper, transport card, card holder verification, communications, cryptography, date, power supply, timer, file, http, http server and xml.

A service/POS terminal 101 also includes a communications interface 104 configured for communication with the remote server 102, that is, for managing the communications with it and a state machine 110 for controlling the execution of the algorithm of each application. A control module 105, for interacting and controlling the modules 103 of the service/POS terminal 101, and an element 106 for capturing and managing the events generated by the modules is also shown in Figure 2. These two elements 105 106 are associated to each of the modules 103.

In addition, the service terminal 101 also has a SIM module 113, with a secure element 114, allowing secure communications from the mobile operator infrastructure to the secure element 114 of the service/POS terminal 101.

Also, the service terminal 101 has a security module 115 for secure key generation and for validating the application algorithms.

Meanwhile, the server 102 hosts an element or interface 107 for managing the communications with the service/POS terminal 101. Besides, the server 102 comprises the logic 108 and possible parameterization of all the applications 109 which are to be run on the server. Thus, the server 102 hosts different applications 109, wherein each of them implements its own algorithm and parameterization, allowing in this way a great flexibility.

In a preferred embodiment, and attending to the security, there is a Sign Server 111 that obtains the secure key for a concrete application and sent it to the OTA Server 112 for forwarding it to the concrete secure element 114 of the SIM module 113 of a particular service/POS terminal 101.

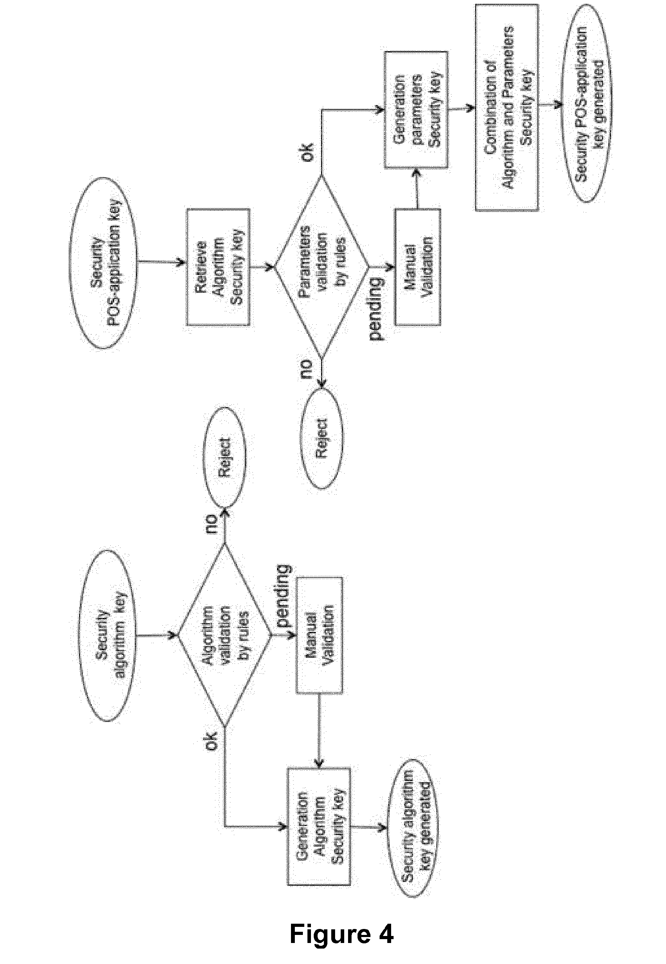

An important aspect is to determine how to customize an application for each service/POS terminal 101 without generating thousands of algorithm versions. A common solution is to have configuration parameters that drive the application algorithm behavior. Some of these parameters could be critical from the security perspective and could be signed in the same way that the algorithm. Another preferred embodiment of the solution proposed, as can be seen in Figure 4, differentiates the security key of the algorithm (or first secure key) and the security key generation of their parameters (or second secure key), although finally it is generated a security key for the whole application set (or new secure key, algorithm + parameters) of each service/POS terminal 101.

Figure 3, represents the calculation of the security key (new secure key) 221, related to an application 209 109: using a security module 220 in an external element, outside the server 102, a security key 221 is generated from the application 209 109 (algorithm 208 108 and application parameters) for each service terminal. This secure key 221 cannot be generated without access to the secure module 220, and it is unique for a concrete application configuration.

Figure 4 illustrates the generation process of the security algorithm key (or first secure key) and security application key (or new secure key) for a particular service terminal.

As shown in Figure 4 for generating the security algorithm key every time a new algorithm version is generated in the server 102, it must be validated and signed by the Sign Server 111. This validation could be manual or semiautomatic rule based. The validation rules characterize the algorithms and their changes to determine if they are valid, rejected or a manual validation is required before they are signed. In case a manual validation is required (for example, when a new algorithm is introduced or a modification over a critical application is performed), some people must enter their personal password to authorize the algorithm security key generation. Manual approval process of an algorithm version could be accompanied by administrative tasks, certification of their functionality, analyze of alerts that rules could generate (e.g.: there are forbidden messages, PIN is not introduced from the special input_PIN operation, unauthorized invocations URLs), generation of parameters validation rules for new algorithms, etc.

Once an algorithm is validated and its security key is generated in the Sign Server 111, it is used during the distribution to service terminal of parameterized applications. To generate the security application key for each service terminal then the Server 102 informs to the Sign Server 111 of the application algorithm and parameters for a service terminal. Then, the security algorithm key is retrieved and the validation phase of the parameters begins. In this case, there are also validation rules that analyze the parameters and determine if they are valid, rejected or a manual validation is required. Once the automatic or manual parameters validation is performed, a security key of the parameters (or second secure key) is calculated and combined with the algorithm key to generate the security POS-application key. This key or new secure key, as mentioned before, is then distributed through the OTA Server 112 until the secure element 114.

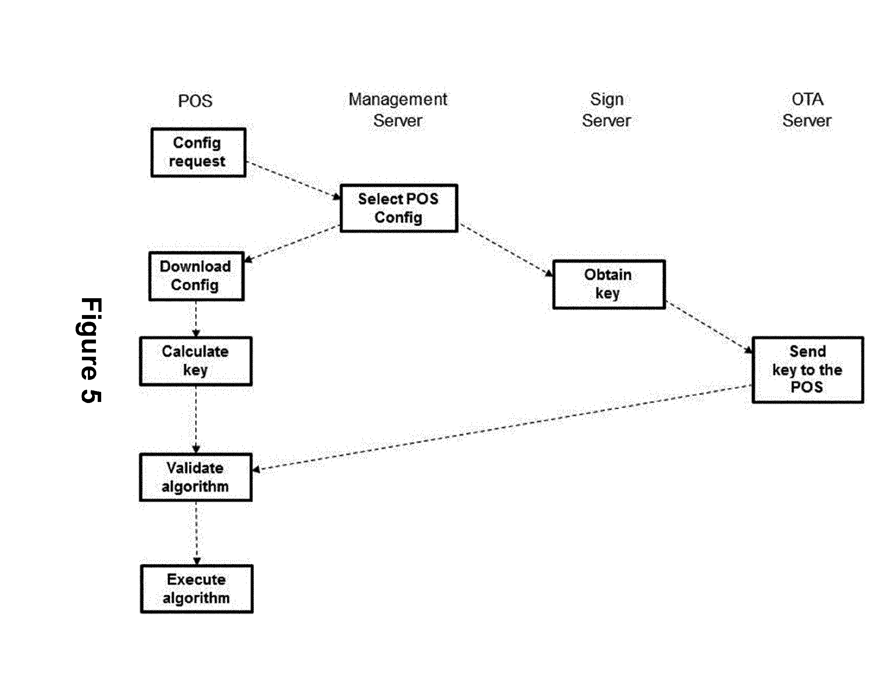

Figure 5 shows the proposed method for managing an operation in a service/POS terminal 101. This method comprises the following steps:

Firstly, when the service/POS terminal 101 is switched on, a request is sent to the server 102 in order to download the algorithm corresponding to the application 109 to be run. Within the server, the algorithm of each one of the applications 109 are defined in a formal way, such that its states, transitions between states and conditions can be represented and transmitted to the service/POS terminal 101.

Next, in parallel, the algorithm of the requested application 109 is transmitted from the server 102 to the service/POS terminal 101, and also to the Sign Server 111.

In the Sign Server 111, as said before, the particular key (new secure key) 221 for that algorithm 208 and parameters are obtained: if it was previously calculated, it is retrieved; if it was not previously calculated, it is necessary to validate the algorithm in some way, assisted or automatically. Once the key 221 is calculated, it is sent to the OTA server 112 with the SIM id associated to this service/POS terminal 101.

Then the OTA server 112, using the OTA mechanisms over the mobile operator infrastructure, send the secure key 221 to the secure element 114 of the SIM 113, in the service/POS terminal 101.

Meanwhile, in the service/POS terminal 101, using the security module 115, where the keys are managed, the process of Figure 3 is repeated, also generating the security key (self-generated secure key) 221' from the received application algorithm 209'.

When both of the secure keys 221 and 221' (the calculated in the service/POS terminal or self-generated key, and the received via OTA in the service/POS terminal or new key) are presented in the service/POS terminal, a validation process happens: if the secure key calculated in the terminal service 221' is different from the secure key 221 received from the OTA server 112, it must reject the application, because it is possible the security of the server 102 could be broken; on the other hand, if both secure keys are equals (calculated on the service/POS terminal 221' and received from the OTA server 221), the algorithm is loaded in the state machine 110. As the communication channels for algorithms and secure keys are separated, and sign process is checked, the risk to hack the execution in the service/POS terminal is controlled, despite the management server was taken under control.

Once the algorithm has been loaded in the state machine 110, the application 109 is ready to be used. When any kind of user interaction occurs in any of the modules 103 comprised in the service/POS terminal 101, an event is generated and captured by the element for managing the events 106. For instance, if a key is pressed or if a card is swiped at the card reader.

Next, the element for managing the events 106 characterizes the event, associating certain information to it. All this information is sent to the state machine 110.

The state machine 110 receives the information of the event generated in the service/POS terminal 101 and, according to the module 103, the additional data and the state of the application 109, and based on the algorithm of said application 109, its possible state transitions and conditions, determines which the next step to be performed at the service/POS terminal 101 is. This step is defined in terms of an operation to be done on any of the modules 103 of the service/POS terminal 101.

The state machine 110 transmits to the control module 105 the operation to be done, on which module 103 and with what parameters. The control module 105 is in charge of interacting with the corresponding module 103, triggering the operation which was determined in the algorithm of the application 109.

This method permits that, making use repeatedly of these steps, any application 109 can be defined as a workflow, which, provided that is was downloaded from the server 102, makes said server to the one who determines the real operating.

A preferred embodiment of this invention could be a system that manages a large volume of POS with customized applications according to commercial agreements between the acquirer and merchants. In this system, different applications such the typical payment by debit/credit card, financing payment on different periods, insurance of the purchased product, raffles, donations, top up mobile phone balance, advertising on receipts, etc. could be applied to each service/POS terminal. The architecture of this system considers a centralized server where the fleet of service/POS terminals is managed and where the applications that must run on them are configured. Due to the strict safety standards surrounding the POS market, it is needed a solution that guarantees a high level of reliability that fraudulent applications in the POS are not installed.

The present invention provides an efficient security method over this system for reducing the risk that illegal applications cannot run on the service/POS terminal. This solution allows to reduce the number of manual actuations, concentrates the risk on a module (Sign server 111), and takes advantage of the secure communications and reliability of OTA services that some telecom operators offer.

Other alternatives embodiments of the invention vary according to the different ways of validating the application. In summary, there are two main elements that manage the validation: the key and the algorithm to generate the signature. For instance, some alternatives for managing the validation of the key could be the case where the key is the same for all the POSs or on contrary if the key is different for every service/POS terminal. In this last case the calculation of the key in the server changes for every POS. The alternatives for algorithms that generate the signature are varied, for instance it can be based on symmetric cryptographic (3DES; RC5, AES...) or based on asymmetric cryptographic (RSA, DSA...).

Another extension of previous embodiments is to consider a TSM scenario with multiple telecom operators. In this case, different instances of the OTA Server 112 are simultaneously managed by a TSM that manages the access to a fleet of service/POS terminal through different telecom operator infrastructure.

In summary, the solution proposed in this application provides a new method and system for updating application algorithms of a service/POS terminal thus allowing big flexibility and the possibility of performing this updates in short periods of time and even more important, personalized for each service/POS terminal. In these conditions, the security transmission of the application algorithms is ensured.

The invention also makes use of some mechanisms that guarantee the reliability of the algorithms that are going to be executed in the state machine.

Finally, the modifications performed over the application US 2011/0219096, keep all the advantages of the mentioned patent in terms of flexibility and control, incorporating also the security, which makes the present solution closest to the actual implementation. In addition, the use of different channels of communication for sending of algorithms and keys associated to them makes increase the security and flexibility of its management.

Although the present invention has been explained in relation to its preferred embodiments, it is to be understood that many other possible modifications and variations can be made without departing from the spirit and scope of the invention as hereinafter claimed.

## Claims

1. A method for managing operations of service terminals, comprising sending a request from at least one service terminal to a remote server to download at least one computer algorithm, said at least one service terminal including a state machine for loading computer algorithms, wherein said at least one downloaded computer algorithm is used for performing operations by said at least one service terminal, **characterized in that** the method comprises the use of a sign server and an OTA server for performing the following steps:
a) carrying out an authentication process of said at least one downloaded computer algorithm providing a first secure key;
b) validating a plurality of parameters of said at least one service terminal, generating a second secure key;
c) further generating a new secure key by combining said first and said second generated secure keys; and
d) sending said new secure key to said at least one service terminal trough an OTA server,
wherein a security module of said at least one service terminal e) further validates said received new secure key by comparing it with a self-generated secure key.

2. A method according to claim 1, wherein said authentication process comprises at least validating and signing by said sign server said at least one downloaded computer algorithm based on validation rules to generate said first secure key.

3. A method according to claim 1 or 2, wherein said validating of a plurality of parameters of said at least one service terminal is based on said validation rules to generate said second secure key.

4. A method according to claims 2 or 3, wherein said validation rules analyze and define if said at least one downloaded computer algorithm and said plurality of parameters of the at least one service terminal are valid, are rejected and/or require a manual validation.

5. A method according to claim 1, comprising using different communication channels for sending said generated new secure key and said computer algorithm.

6. A method according to claim 1, wherein said new secure key has an associated SIM identification regarding said at least on service terminal.

7. A method according to claim 2, wherein said signing is based on at least one of a symmetric or an asymmetric cryptography.

8. A system for managing operations of service terminals, wherein at least one service terminal (101) comprising a plurality of modules (103), a state machine (110) for loading computer algorithms and a communications interface (104) is configured to download at least one algorithm (208) of at least one application (109) from a remote server (102) to contribute in the performance of said operations to be executed in said at least one service terminal (101), wherein said remote server (102) further comprises a communications interface (107) for communicating with said at least one service terminal (101), **characterized in that** the system further comprises:
- a sign server (111) configured to carry out an authentication process of said at least one downloaded computer algorithm and a validation process of a plurality of parameters of said at least one service terminal generating secure keys;
- a security module (115) configured to generate and validate said security keys; and
- an OTA server (112) to distribute said generated security keys.

9. A system according to claim 8, wherein said at least one service terminal (101) further comprises a SIM module (113) comprising a security element (114) configured to allow a secure communication from a mobile operator through said OTA server (112) to said secure element (114).

10. A computer program product, comprising software code adapted to perform steps a) to e) of claim 1 when run at least on a computer or any other form of programmable hardware.
